# EUROPEAN PATENT APPLICATION

(11) **EP 1 460 531 A2**
(43) Date of publication of application: **22.09.2004**
(21) Application number: 04251542.9
(22) Date of filing: 18.03.2004
(51) Int. Cl.: G06F 3/12

(54) **Printer information setting method, server and program**

(30) Priority: 20.03.2003 JP 2003078989
(71) Applicant: Ricoh Company Ltd., Tokyo 143-8555 (JP)
(72) Inventor: Ishida, Akio, Kawasaki-shi, Kanagawa (JP)
(74) Representative: Leeming, John Gerard

(57) **Abstract**

A method used for providing configuration information of a printer to a printer driver in a server in an image printing system that includes a client, the printer and the server is provided, in which the method includes the steps of: storing, in the server, configuration information of the printer obtained from a setting information storing region of the client, wherein the stored configuration information is associated with the printer driver of the printer; and passing the configuration information of the printer to the printer driver in the server.

## Description

The present invention relates to technology for reflecting configuration data of a printer in a printer driver in a server used for constructing a server-based environment (for example, "Metaframe" environment) in which applications run only in the server.

In a conventional client/server system, applications are executed on each client. Therefore, for example, there is a problem on system management in that management for applications is necessary for many clients. To solve such problem of the conventional client/server system, there is a system in which application programs run only in a server instead of in clients. A system introducing the Metaframe server is an example of such system.

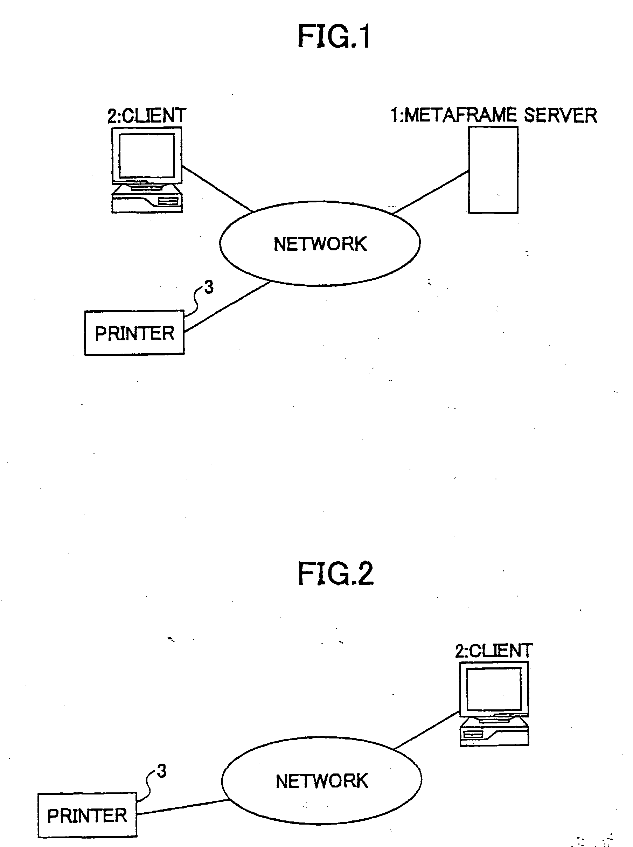

Fig.1 shows an example of the Metaframe environment. An application program run on an Metaframe server 1, and a client 2 only displays execution results of the application program.

To use a printer 3 in the Meraframe environment, for example, a printer driver same as one that is usually used in the client 2 to use the printer 3 is installed in the Metaframe server 1 beforehand. Then, a logical printer of the printer 3 is auto-created when the client 2 that uses the printer 3 logs on the Metaframe server 1.

The entity of the logical printer is the printer driver stored beforehand in the server 1. To create a logical printer is to make setting for the printer driver stored in the server 1 such that the printer driver can be used by the client 2.

When printing is performed from the client 2, print data is generated in the Metaframe server 1, and the print data is redirected to the printer 3 via the client 2, so that the printer 3 prints the print data. According to the printer auto-creation in the Metaframe environment, although the application is running only in the server 1, the user can print from the application running on the Metaframe server 1 to her local printers, just like she can print from local applications. For example, "Inside Citrix Metaframe XP" of Addison-Wesley refers to the printer auto-creation process in more detail.

In addition, US2002/0018234A1 discloses a conventional technology of a Metaframe print system. The US2002/0018234A1 discloses a universal printer driver that can be used in the Metaframe environment.

In the printer system of the Metaframe environment, there is a problem in that, although printer options are set in the client side printer driver, the option setting is not reflected on the printer driver in the Metaframe server side in the printer auto-creation process.

That is, option setting in the logical printer remains default setting. For example, even if the printer has a double-sided tray, the setting of the auto-created logical printer remains no double-sided tray. In addition, settings for paper size and paper type of tray remain default.

An object of the present invention is to provide technology to reflect configuration data of a printer to a printer driver in the server in an environment in which application programs run only in the server instead of in clients.

The object is achieved by a method used for providing configuration information of a printer to a printer driver in a server in an image printing system that includes a client, the printer and the server, including the steps of:
storing, in the server, configuration information of the printer obtained from a setting information storing region of the client, wherein the stored configuration information is associated with the printer driver of the printer; and
passing the configuration information of the printer to the printer driver in the server.

According to the present invention, the configuration information obtained from the setting information storing region in the client is stored in the server, so that the configuration information is reflected to the printer driver in the server. Thus, the option information can be properly reflected to the server. In addition, according to the present invention, since the configuration information of the printer is obtained from the setting information storing region, the setting in the server to reflect the configuration information can be performed without the printer.

In the method, the step of storing includes the steps of:
storing the configuration information of the printer in the server; and
storing, in the server, correspondence information between the printer driver and the configuration information file of the printer.

According to the present invention, configuration information suitable for a printer used by a client can be reflected to the server.

In the method, the step of storing includes the steps of:
storing the configuration information of the printer in the server; and
storing correspondence information having a client name field, a printer driver name field, a printer icon name field, and a configuration information file name field.

In the method, the step of passing includes the step of:
referring to the correspondence information and searching for the configuration information corresponding to information sent from the client. Therefore, configuration information suitable for specified conditions can be used.

In the method, the server includes a function for constituting an environment in which applications run only in the server, and
the step of passing configuration information of the printer is performed when a logical printer is auto-created by the function when the client logs onto the server.

According to the present invention, the option configuration can be properly set for the auto-created logical printer in the Metaframe environment.

### BRIEF DESCRIPTION OF THE DRAWINGS

Other objects, features and advantages of the present invention will become more apparent from the following detailed description when read in conjunction with the accompanying drawings, in which:
Fig.1 shows an example of a Metaframe environment;
Fig.2 shows a normal configuration including the client 2 and the printer 3;
Fig.3 is a figure for explaining bidirectional communication according to a conventional technology;
Fig.4 shows an example of a system configuration according to an embodiment of the present invention;
Fig.5 shows a functional block diagram of the server according to a first embodiment of the present invention;
Fig.6 is a flowchart for explaining whole processes;
Fig.7 is a diagram for explaining the outline of the option information file creation process;
Fig.8 shows a flowchart for creating the option information file;
Fig.9 shows an example of printer setting;
Fig.10 shows a functional block diagram of a tool for storing settings;
Fig.11 shows an example of a screen displayed by the user interface part 13;
Fig.12 is a flowchart showing operations of the tool for storing settings;
Fig.13 shows a configuration example of the option information file according to the first embodiment of the present invention;
Fig.14 shows a table indicating correspondence between printer driver and option information file;
Fig.15 shows a flowchart for the printer driver in the server to obtain the option information file according to the first embodiment of the present invention;
Fig.16 shows example information of a related information file according to a second embodiment of the present invention;
Fig.17 shows a functional block diagram of a printer information registration tool according to the second embodiment of the present invention;
Fig.18 is a screen example displayed by the user interface part 23;
Figs.19A and 19B show examples of related information files created according to the second embodiment of the present invention;
Fig.20 is a flowchart for explaining operations of the printer information registration tool;
Fig.21 shows a flowchart for explaining a process for passing the stored option information file to the printer driver in the server;
Fig.22 shows a block diagram of a computer.

### DETAILED DESCRIPTION OF THE PREFERRED EMBODIMENTS

As described in the related art, there is a problem in that option setting in the printer driver in the client side is not inherited to the printer driver in the Metaframe server. The reason of the problem will be described in the following.

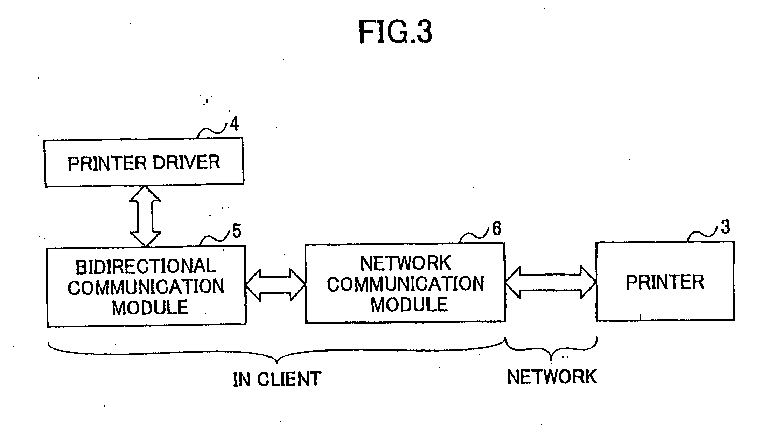

In a normal configuration including the client 2 and the printer 3 shown in Fig.2, the client 2 and the printer 3 performs bidirectional communication so that option data such as the "double-sided tray" of the printer 3 can be obtained by the client 2. The bidirectional communication is performed, for example, in a configuration shown in Fig.3. In this configuration, a network communication module 6 obtains information specified by a bidirectional communication module 5 from the printer 3 via a network by using a protocol such as SNMP, in which the bidirectional communication module 5 is a part of the printer driver 4.

However, the above-mentioned bidirectional communication is not available between the Metaframe server 1 and the printer 3 in the Metaframe environment. Therefore, the option data cannot be obtained by the printer driver in the Metaframe server. Thus, the above-mentioned problem arises.

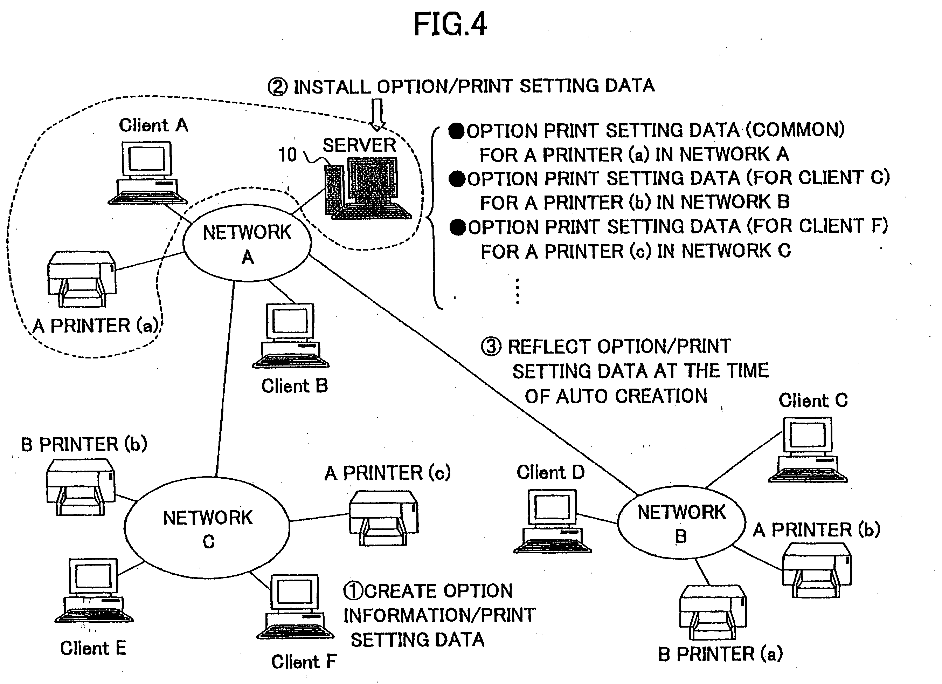

In the following, first and second embodiments of the present invention are described with reference to figures. First, an example of a system configuration is shown in Fig.4, which configuration is common to the first and second embodiments. In the example of Fig.4, clients A-F, A printers (a)∼(c), and B printers (a) and (c) are connected to networks. The A printer and the B printer are different models. The networks shown in Fig.4 are separated to a network A, a network B and a network C. In addition, a Metaframe server 10 (referred to as a server hereinafter) is connected to the network A. Each client is a terminal such as a PC (Personal Computer).

In this embodiment, a client (the client F in the example of Fig.4) prepares option information/print setting data by using a tool for setting and storing. The option information is information on a paper feed tray or option devices attached to the printer. The print setting data is setting data used to make settings for integration printing or double sided printing or the like. The print setting data is usually set in a client by using a property screen of a printer driver in the client by the user. Instead of preparing the option information/print setting data, the client may prepare only option information.

Next, the option information/print setting data that are obtained in the client side are installed in the server. In the first embodiment, the option information/print setting data are stored in the server such that the option information/print setting data are related to types of printer drivers used by clients.

In the second embodiment, the option information/print setting data are stored such that the option information/print setting data are related not only to the types of printer drivers but also to conditions such as user names and client names. As examples of correspondences between the conditions and the option information/print setting data, Fig.4 shows option information/print setting data that are for A printer (a) in the network A and are common to all clients, option information/print setting data (for client C) for A printer (b) in the network B, and option information/print setting data (for client F) for A printer (c) in the network C.

At the time of auto-creation of the logical printer performed when the client connects to the server 10, option information/print setting data are reflected to the printer driver in the server 10, so that the user can perform printing in a status in which the option information/print setting data are normally reflected.

### (First embodiment).

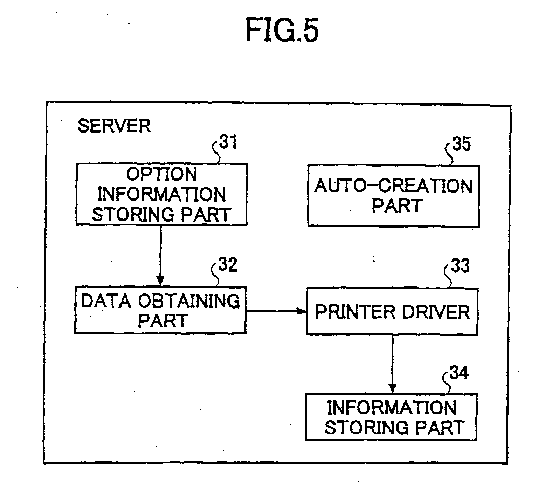

In the following, a first embodiment is described. Fig.5 shows a functional block diagram of the server according to this embodiment. This functional block diagram also applies to the second embodiment.

As shown in Fig.5, the server includes an option information storing part 31 for storing option information/print setting data, a printer driver 33, a data obtaining part 32 for obtaining necessary option information/print setting data and passing the option information/print setting data to the printer driver 33, an information storing part 34 for storing setting information, and an auto-creation part 35 for performing logical printer auto-creation process. The option information storing part 31 also stores the after-mentioned related information file.

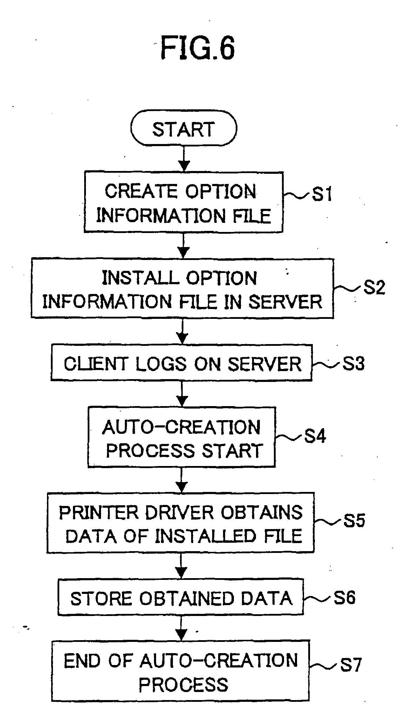

Whole processes performed by the thus configured server and the clients are described with reference to a flowchart of Fig.6.

First, the client obtains option information/print setting data so as to prepare a file (referred to as an option information file hereinafter) in step S1. Then, the option information file is installed in the server in step S2.

After that, when the client logs onto the server in step S3, the logical printer auto-creation process starts in step S4. At this time, the printer driver in the server obtains data in the installed option information file in step S5. Then, the obtained data is stored in an information storing area in the server in step S6. After the auto-creation process ends in step S7, the user can perform printing from the client in a status in which the option information is normally reflected.

First, in the above-mentioned processes, the process for generating the option information file is described in detail.

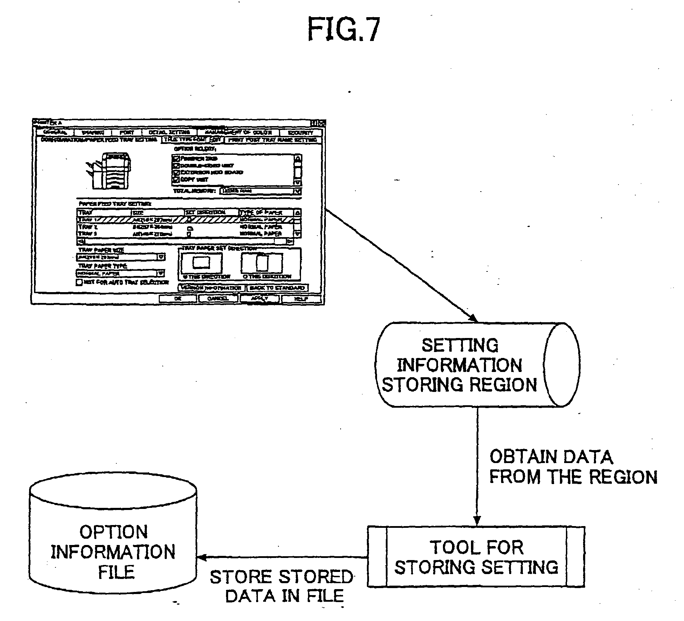

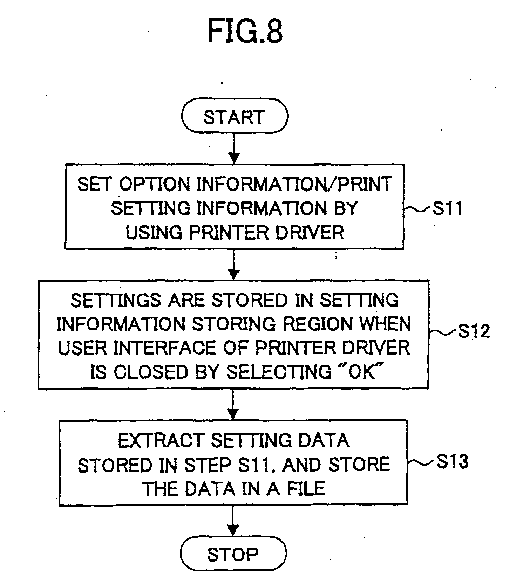

Fig.7 is a diagram showing the process, and Fig.8 shows a flowchart of the process. As shown in Fig.7, in the client side, information in a setting information storing region (so-called "registry") is read by using a tool for storing settings, and the information is stored in another file, in which the information in the setting information storing region was stored by making settings for the printer driver of the client.

Generally, when the user makes settings for a printer by using a setting screen of the printer driver in the client, the setting information is stored in the setting information storing region of the client, so that the printer driver refers to the information as necessary to operate the printer according to the settings.

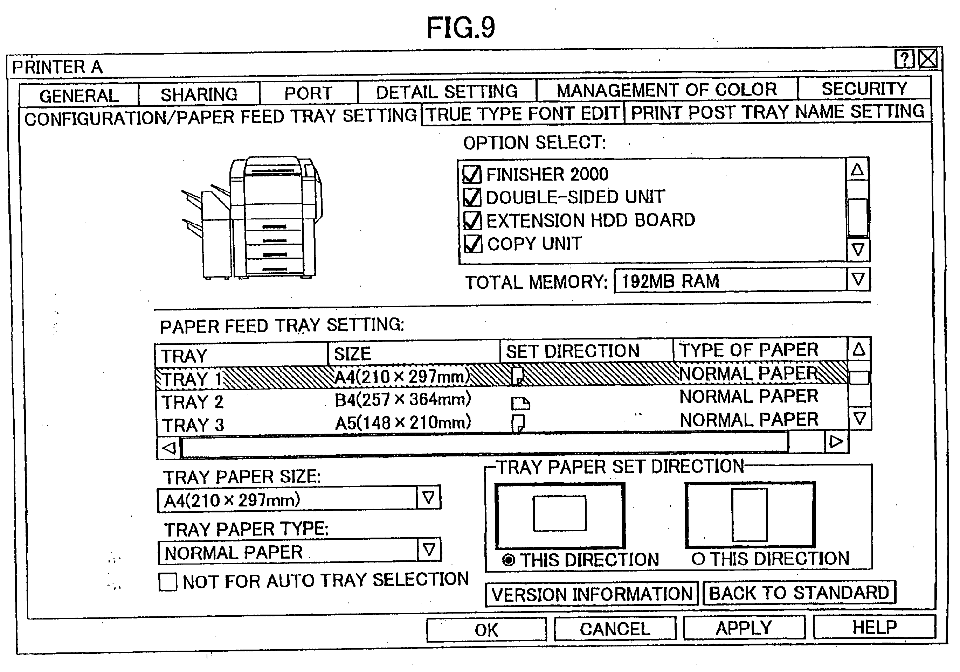

For example, when settings shown in Fig.9 are made, the setting information storing region in the client stores items specified in "option selection", "paper feed tray setting", "paper size", "paper type", "set direction" and the like.

Next, a process flow for creating option information file is described with reference to Fig.8. First, the user sets option information/print setting data (shown in Fig.9, for example) by using the printer driver in the client in step S11. Then, by selecting "OK" in the user interface shown in Fig.9, the settings are stored in the setting information storing region in the client in step S12. After that, the data stored in the setting information storing region in the client is read by using the tool for storing settings, and is stored in another file (option information file) in step S13.

Next, the above-mentioned tool for storing settings is described.

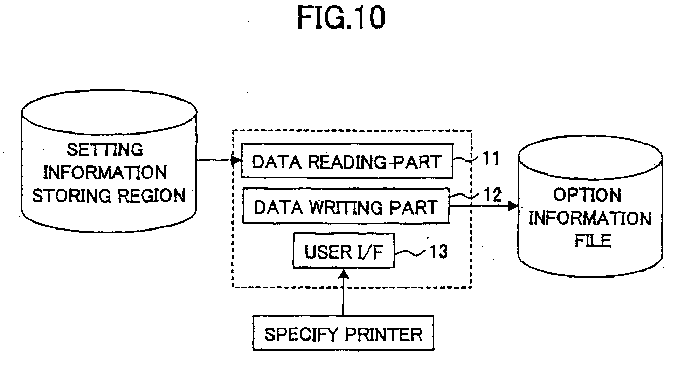

Fig.10 shows a functional block diagram of the tool for storing settings. The tool for storing settings is a program executing on the client. By executing the program on the client, a data reading part 11, a data writing part 12 and a user interface part 13 shown in Fig.10 are realized.

The data reading part 11 has a function for reading data from a setting information storing region, in the client, corresponding to a printer driver specified via the user interface part 13. The data writing part 12 has a function for storing data read by the data reading part 11 into the option information file that is specified via the user interface part 13.

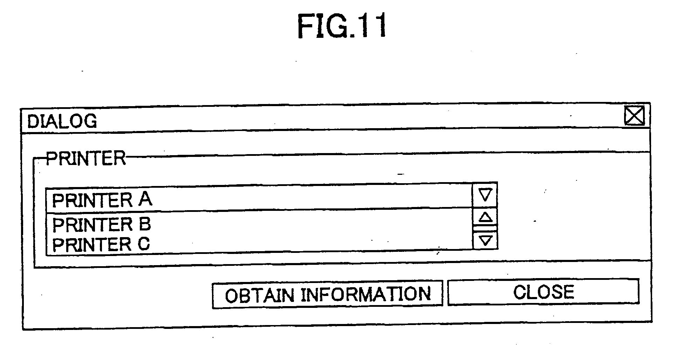

The user interface part 13 displays a screen shown in Fig.11 for example, so that the user inputs a printer name for which printer the user wants to store the data.

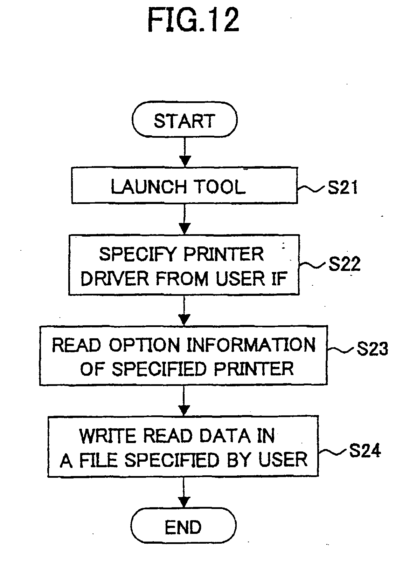

Next, the operation of the tool for storing settings is described with reference to a flowchart shown in Fig.12.

When the tool is launched in step S21, the screen shown in Fig.11 is displayed. The user specifies a printer name (printer driver name) in step S22, so that information in the setting information storing region in the client is specified as information to be stored in an option information file.

After that, the data reading part 11 reads the option information/print setting data of the specified printer from the setting information storing region in step S23. Then, the data writing part 12 writes the read data into the file (option information file) specified by the user in step S24. The name of the file in which the data is written may be initially specified, or may be specified after the data is read out.

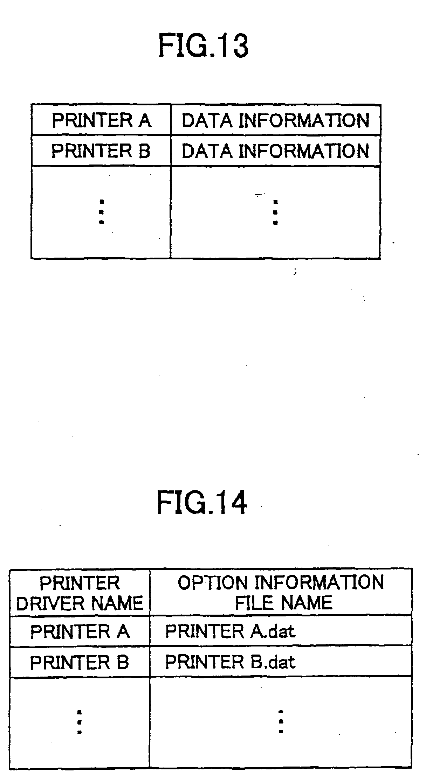

Although one file name is specified for each printer driver in the above-mentioned example, one file name can be specified for a plurality of printer drivers. In such a case, for example, an option information file having data configuration shown in Fig.13 is created.

The printer driver of the client can be configured to have the function of the tool for storing settings, so that the option information file can be automatically created when "OK" is selected on the screen of the printer driver. This can be realized by automatically executing the program of the tool for storing settings by passing the printer driver name as an argument right after the "OK" button is pushed. In this example, the option information file can be automatically set, for example, by adding characters to the printer driver name. Accordingly, the option information file corresponding to the printer driver can be automatically created.

Next, the process for installing thus created option information file into the server is described. This process corresponds to the step S2 shown in Fig.6.

In the first embodiment, for storing the created option information file into the server, regions are separated for each printer driver name, and an option information file is stored in a region corresponding to a printer driver name. In addition, instead of storing the option information file in the corresponding region, a table shown in Fig.14 can be stored in a file, in which the printer driver name is associated with the file name. In the following a case where the table shown in Fig.14 is used is described.

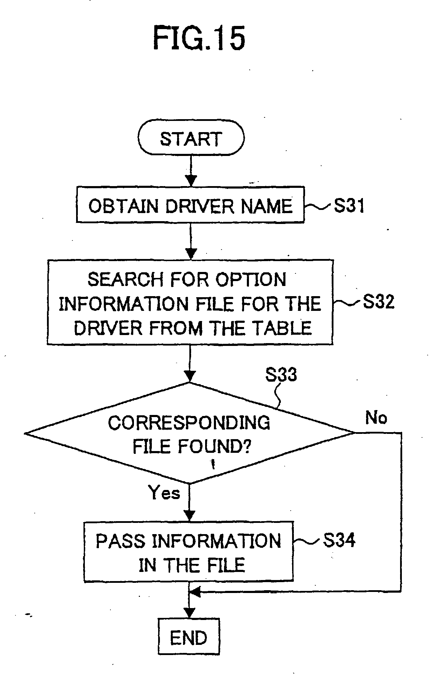

Fig.15 shows a process flow in which the printer drier in the server obtains data in the option information file. Fig.15 corresponds to the step S5 of the flowchart shown in Fig.6.

When the client logs onto the server, the server obtains a printer driver name of a printer that can be used by the client from information sent from the client to the server in step S31. Then, the server searches for an option information file name corresponding to the printer driver name by referring to the table shown in Fig.14 in step S32. When the option information file corresponding to the printer driver name exists (Yes in step S33), the option information is passed to the printer driver in the server in step 534, so that the printer driver of the server obtains data of the option information file. After that, as shown in Fig.6, the printer driver of the server stores the data of the option information file in its setting information storing region. Accordingly, the user can use the printer in a status in which the option information is reflected.

By adopting the above-mentioned configuration, since the printer driver of the server can obtain option information corresponding to the printer driver, proper settings can be made for the printer driver.

### (Second embodiment)

Next, the second embodiment of the present invention is described. In the first embodiment, in the server, data in the option information file is passed to the printer driver of the server by using the table in which printer drivers are associated with file names. In the second embodiment, the capability is enhanced so that the user can use an option information file for a particular client, for example. In the second embodiment, the process for creating the option information file is the same as that of the first embodiment.

In this embodiment, the server includes information, as a related information file, indicating conditions for each option information file under which condition the option information file can be used. The server specifies an option information file that satisfies the corresponding condition by searching the related information file by using information such as a client name.

Although the related information file can be created manually by using an editor for example, an example is described in the second embodiment in which the related information file is created by using a tool for installing the option information file in the server.

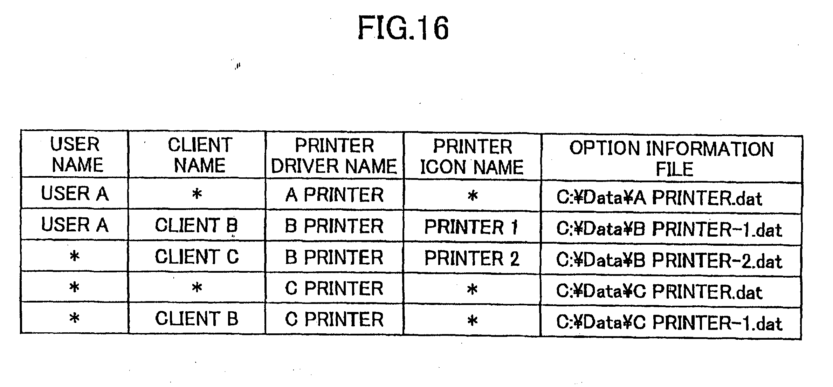

Fig.16 shows example information of the related information file. As shown in the figure, the related information file includes fields : user name, client name, printer driver name, printer icon name and option information file, in which the fields are related with each other. In the file, "*" (wild card) indicates any data. For example, if the user name is indicated as "*", the corresponding option information file is common to all users. In data matching operation by using the related information file, matching of particular data takes precedence over wild card matching. In the file, "printer icon" is an icon created by adding a printer in the client.

For example, when the user name is "user A", the client name is "client B", the printer driver name is "B printer", and a printer icon name is "printer 1", dada in "C:¥Data¥B printer-1.dat" is passed to a corresponding printer driver in the server. When the user name is "user A", the client name is "client B", and the printer driver name is "C printer", data in "C:¥Data¥C printer-1.dat" is passed to a corresponding printer driver in the server. Since a printer driver of a printer model cannot be used for another printer model, inputting a particular printer driver name in the printer driver name field is mandatory.

The related information file can be stored as a file having a table format as shown in Fig.16. Alternatively, the related information file can be prepared for each user (for example, user name is used as the file name, or the files are stored in separate folders for each user). In this case, the user name field is not necessary. In addition, in this case, a file commonly used for all users (file corresponding to a record in which the user name is * in Fig.16) is stored in a region (folder) for files commonly used for all users by assigning a name other than any user name.

In the second embodiment, in step S2 shown in Fig.6, the option information file is installed and the related information file is created by using a printer information registration tool.

The printer information registration tool is described in the following. The printer information registration tool is a program operating on a client (or on the server).

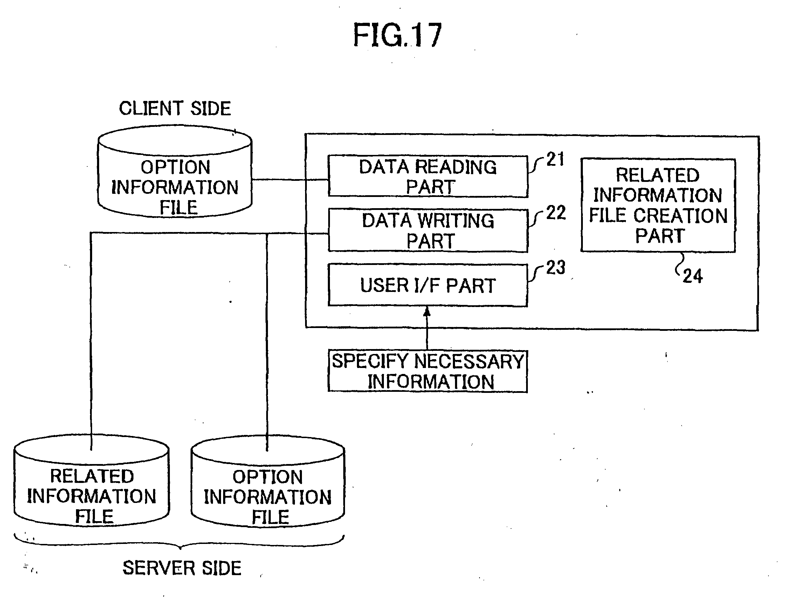

Fig.17 shows a functional block diagram of the program when the program is executed. As shown in Fig.17, the printer information registration tool includes a data reading part 21, a data writing part 22, an user interface part 23, and a related information file creation part 24. The data reading part 21 has a function for reading data of a specified option information file from the client having the printer information registration tool or from other client on the network. The data writing part 22 has a function for storing the read option information file in a specified region in the server, and a function for storing the related information file created by the related information file creation part 24 in a predetermined region in the server.

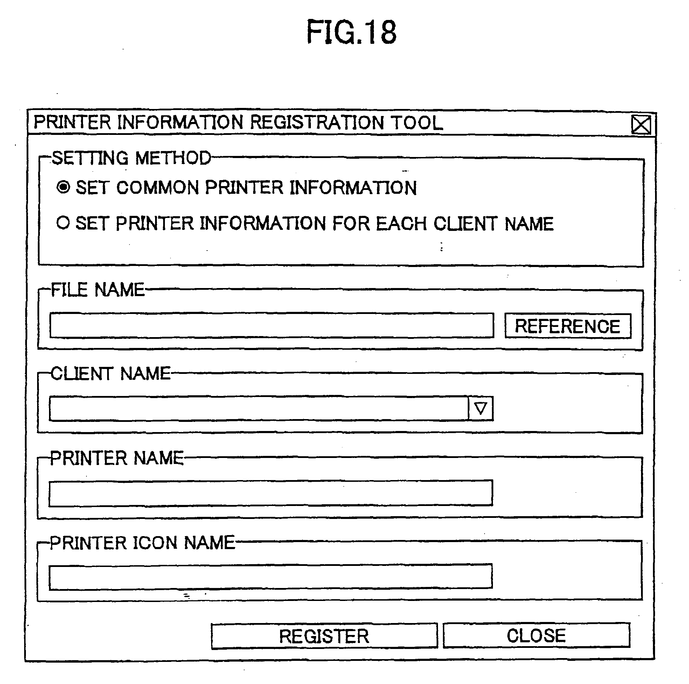

The user interface part 23 displays a screen shown in Fig.18, for example, so that the user can input items. The user interface shown in Fig.18 is an example in which the related information file is created for each user. In Fig.18, when the user wants to specify an option information file commonly used for any client, the user selects "set common printer information". For example, when the user knows that a printer is used with common setting for every client, the client selects "set common printer information" for the printer. In this case, the user inputs a printer name (printer driver name) and a file name (option information file name).

When the user selects "set printer information for each client name", the user inputs an option information file name, a client name, a printer name, and a printer icon name, but the printer icon name is not mandatory.

When the user inputs the specified items and push "registration", a screen for specifying a region for storing the option information file is displayed. At this time, for storing an option information file common to all users, a predetermined region for storing the file is specified. For storing an option information file for a specific user, a region for the specific user is specified, or a file name is specified such that the user can be identified from the file name.

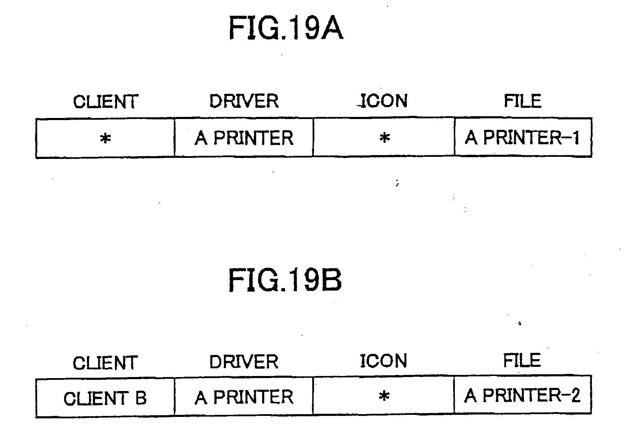

By using the input items, the related information file creation part 24 creates a related information file having fields shown in Fig.16. For example, when using the above-mentioned user interface, if "set common printer information" is selected, the A printer is specified as a printer name, and the A printer-1 is selected as the option information file, a related information file shown in Fig.19A is created. If "set printer information for each client name", the A printer is specified as the printer name, the client B is specified as the client name and the A printer-2 is selected as the option information file, a related information file shown in Fig.19B is created.

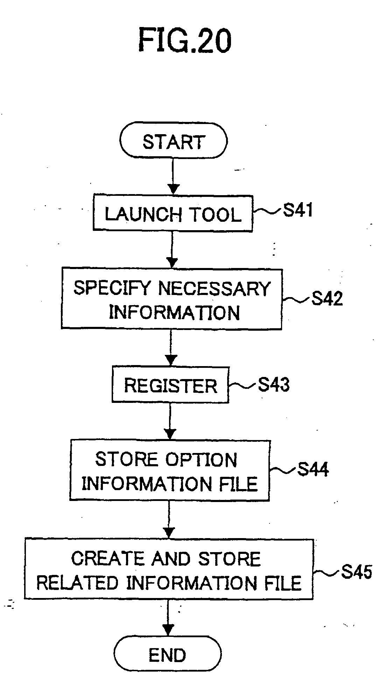

Next, the operation of the printer information registration tool is described with reference to the flowchart of Fig.20.

When the tool is launched in step S41, the screen shown in Fig.18 is displayed by the user interface part 23. Then, the user designates a printer name (printer driver name), an option information file name and the like in step S42, so that the option information file name to be registered and information items in the related information file are specified.

After the registration button is pushed in step S43 and the region is- specified, the option information file is stored in the region in step S44. Next, the related information file is created and stored as mentioned above in step S45. Creation and storing of the related information file may be performed prior to storing the option information file.

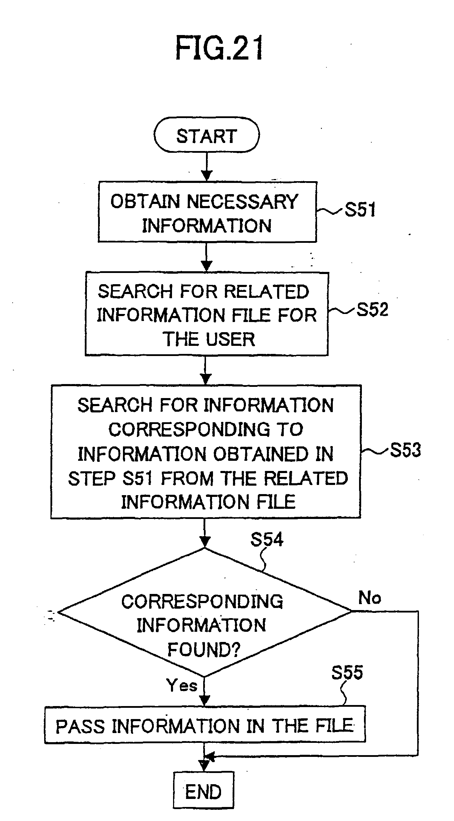

Next, a process for passing data in the stored option information file to the printer driver in the server is described with reference to a flowchart of Fig.21. This process corresponds to the step S5 in the flowchart of Fig.6.

By using information sent to the server from the client when the client logs into the server, the server obtains necessary information such as a user name, a client name, a printer driver name that can be used by the client, and a printer icon name and the like in step S51.

Next, the server searches for a related information file common to all users and a related information file corresponding to the user name in step S52. Then, the server searches for an option information file corresponding to items (condition) obtained from the related information file in step S53. When the option information file that satisfies the condition (Yes in step S54), information in the option information file is passed-to the printer driver corresponding to the option information file in the server in step S55.

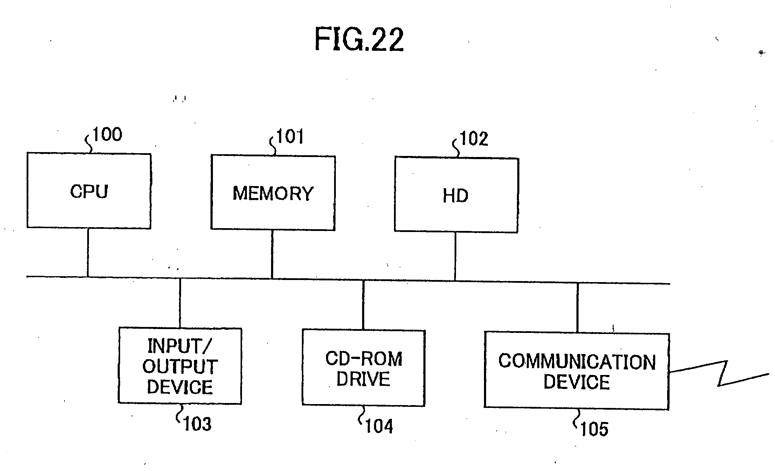

In each embodiment, the process performed in the server is performed by a program in the server, and the process performed in the client is performed by a program in the client. Each of the programs relating to processes of the present invention in the server and the client can be stored in a recording medium such as a CD-ROM, and the CD-ROM can be distributed. In addition, the program can be installed in the server or in the client via a network. Each of the server and the client can be realized by using a computer. Fig.22 shows an example block diagram of the computer. The computer includes a CPU 100, a memory 101, a hard disk 102, an input/output device 103, a CD-ROM drive 104, and a communication device. The program is loaded in the hard disk 102, and is executed by using the CPU 100 and the memory 101.

According to the above-mentioned embodiments, the option information of the printer is obtained from a setting information storing region in the client, and the option information is stored in the server. Therefore, the printer driver in the server can obtain the option information without bidirectional communication between the server and the printer. Therefore, in the process of auto-creation of the logical printer in the Metaframe environment, the conventional problem in that option information cannot be properly reflected to the printer driver in the server can be solved.

As mentioned above, according to the present invention, a method is provided in which the method is used for providing configuration information of a printer to a printer driver in a server in an image printing system that includes a client, the printer and the server, and the method includes the steps of:
storing, in the server, configuration information of the printer obtained from a setting information storing region of the client, wherein the stored configuration information is associated with the printer driver of the printer; and
passing the configuration information of the printer to the printer driver in the server.

In addition, a computer program for causing a client to store configuration information of a printer as a file is provided, wherein the client is used in an image printing system that includes the client, the printer and a server including a printer driver of the printer, the computer program includes:
obtaining program code means for obtaining configuration information of the printer from a setting information storing region in the client; and
storing program code means for storing the obtained configuration information in a file.
According to this computer program, the configuration information of the printer can be stored as a file, and the file can be installed in the server as necessary.

In the computer program, the configuration information of the printer is information stored in the setting information storing region by a printer driver in the client. Thus, the configuration information file can be obtained easily by using the printer driver in the client.

In the computer program, the obtaining program code means obtains print setting information in addition to the configuration information, and the storing program code means stores the configuration information and the print setting information. According to the computer program, print setting information such as integration printing and double-sided printing can be obtained. By installing the print setting information into the server, initial settings for printing by using the server can be changed.

The computer program further includes program code means for making the obtaining program code means to start to obtain the configuration information right after the configuration information is stored in the setting information region by the printer driver in the client. According to the computer program, the configuration information file can be created at the same time when the printer driver on the client is closed, so that convenience of the user improves.

The computer program further includes program code means for displaying a user interface screen by which a printer driver name can be specified; wherein the obtaining program code means obtains configuration information of the printer corresponding to the printer driver name input from the user interface screen.

In addition, according to the present invention, a computer program for causing a computer to store configuration information of a printer into a server is provided, wherein the server is used in an image printing system that includes a client, the printer and the server, and the server includes a printer driver of the printer, the computer program includes:
program code means for reading the configuration information of the printer,
program code means for storing the configuration information in the server;
program code means for creating correspondence information between the printer drover and the configuration information, and storing the correspondence information in the server. According to the computer program, the user can easily install the configuration information into the server. In addition, since the correspondence information is created, it is not necessary that the user prepares the correspondence information.

In the computer program, the configuration information is a file created from information read from a setting information storing region in the client. Since it is easy to store information into the setting information storing region in the client by using the printer driver in the client, the configuration information can be easily prepared.

In the computer program, the correspondence information includes a client name field, a printer driver name field, a printer icon name field, and a configuration information file name field.

The computer program may further includes:
program code means for displaying a user interface screen used for specifying the file,
wherein the program code means for storing the configuration information stores a file specified from the user interface screen as the configuration information in the server. According to the computer program, proper configuration information can be stored in the server by using the user interface screen.

In the computer program, the user interface screen includes fields for specifying a configuration information file, a client name, a printer driver name, and a printer icon name, and
the correspondence information is created by using items of information input from the user interface screen. According to- the computer program, correspondence information according to items of information specified by the user can be created.

The present invention is not limited to the specifically disclosed embodiments, and variations and modifications may be made without departing from the scope of the present invention.

The present application contains subject matter related to Japanese patent application No.2003-078989, filed in the JPO on March 20, 2003, the entire contents of which being incorporated herein by reference.

## Claims

1. A method used for providing configuration information of a printer to a printer driver in a server in an image printing system that includes a client, the printer and the server, comprising the steps of:
storing, in the server, configuration information of the printer obtained from a setting information storing region of the client, wherein the stored configuration information is associated with the printer driver of the printer; and
passing the configuration information of the printer to the printer driver in the server.

2. The method as claimed in claim 1, wherein the step of storing comprises the steps of:
storing the configuration information of the printer in the server; and
storing, in the server, correspondence information between the printer driver and the

3. The method as claimed in claim 2, when the step of passing comprises the step of:
referring to the correspondence information and searching for the configuration information corresponding to information sent from the client.

4. The method as claimed in claim 1, wherein the step of storing comprises the steps of:
storing the configuration information of the printer in the server; and
storing correspondence information having a client name field, a printer driver name field, a printer icon name field, and a configuration information file name field.

5. The method as claimed in claim 1, 2, 3 or 4 wherein the server includes a function for constituting an environment in which applications run only in the server, and
the step of passing configuration information of the printer is performed when a logical printer is auto-created by the function when the client logs onto the server.

6. A server for use in an image printing system that includes a client, a printer and the server, wherein the server includes a printer driver of the printer, comprising:
means for storing configuration information of the printer obtained from a setting information storing region in the client, wherein the stored configuration information is associated with the printer driver of the printer;
means for passing the configuration information of the printer to the printer driver in the server.

7. The server as claimed in claim 6, the means for storing configuration information comprising:
means for storing the configuration information of the printer; and
means for storing correspondence information between the printer driver and the configuration information of the printer.

8. The server as claimed in claim 7, the means for passing the configuration information of the printer comprising:
means for referring to the correspondence information and searching for the configuration information corresponding to information sent from the client.

9. The server as claimed in claim 6, the means for storing configuration information comprising:
means for storing the configuration information of the printer; and
means for storing correspondence information having a client name field, a printer driver name field, a printer icon name field, and a configuration information file name field.

10. The server as claimed in claim 6, 7, 8 or 9, wherein the service includes a function for constituting an environment in which applications run only in the server, and
the means for passing configuration information passes the configuration information when a logical printer is auto-created by the function when the client logs onto the server.

11. A method for causing a client to store configuration information of a printer as a file, where the client is used in an image printing system that includes the client, the printer and a server including a printer driver of the printer, the method comprising:
obtaining configuration information of the printer from a setting information storing region in the client; and
storing the obtained configuration information in a file.

12. The method as claimed in claim 11, wherein the configuration information of the printer is information stored in the setting information storing region by a printer driver in the client.

13. The method as claimed in claim 12, wherein print setting information is obtained in addition to the configuration information, is stored in said file.

14. The method as claimed in claim 12, wherein the step of obtaining the configuration information starts right after the configuration information is stored in the setting information region by the printer driver in the client.

15. The method as claimed in claim 11, 12, 13 or 14 further comprising displaying a user interface screen by which a printer driver name can be specified;
wherein the step of obtaining obtains configuration information of the printer corresponding to the printer driver name input from the user interface screen.

16. A method for causing a server to provide configuration information of a printer to a printer driver of the printer in the server, wherein the server is used in an image printing system that includes a client, the printer and the server, the method comprising:
referring to correspondence information used for searching for the configuration information of the printer, and passing the configuration information of the printer to the printer driver in the server.

17. The method as claimed in claim 16, wherein the correspondence information is correspondence information between the printer driver and the configuration information of the printer.

18. The method as claimed in claim 16, wherein the server includes a function for constituting an environment in which applications run only in the server, and further comprising
passing the configuration information to the printer driver when a logical printer is auto-created by the function when the client logs onto the server.

19. A method for causing a computer to store configuration information of a printer into a server, wherein the server is used in an image printing system that includes a client, the printer and the server, includes a printer driver of the printer, the method comprising:
reading the configuration information of the printer;
storing the configuration information in the server;
creating correspondence information between the printer driver and the configuration information, and storing the correspondence information in the server.

20. The method as claimed in claim 19, wherein the configuration information is a file created from information read from a setting information storing region in the client.

21. The method as claimed in claim 20, further comprising:
displaying a user interface screen used for specifying the file;
wherein the step of storing the configuration information stores a file specified from the user interface screen as the configuration information in the server.

22. The method as claimed in claim 21, wherein the user interface screen includes fields for specifying a configuration information file, a client name, a printer driver name, and a printer icon name; and
the correspondence information is created by using items of information input from the user interface screen.

23. The method as claimed in any one of claims 16 to 22, wherein the correspondence information includes a client name field, a printer driver name field, a printer icon name field, and a configuration information file name field.

24. A computer program comprising program code means that, when executed on a computer system instructs the computer system to perform the method of any one of claims 1 to 5 or 11 to 23.

25. A computer-readable storing medium having stored thereon a computer program according to claim 24.
